**Europäisches Patentamt**

**European Patent Office**

**Office européen des brevets**

(11) Veröffentlichungsnummer: **0 289 751**
**B1**

(12) **EUROPÄISCHE PATENTSCHRIFT**

(45) Veröffentlichungstag der Patentschrift:
**03.10.90**

(51) Int. Cl.⁵: **A47J 37/12**, F24C 15/20

(21) Anmeldenummer: **88104056.2**

(22) Anmeldetag: **15.03.88**

(54) **Löschsystem für Friteusen.**

(30) Priorität: **01.04.87  DE 3710905**

(43) Veröffentlichungstag der Anmeldung:
**09.11.88 Patentblatt 88/45**

(45) Bekanntmachung des Hinweises auf die Patenterteilung:
**03.10.90 Patentblatt 90/40**

(84) Benannte Vertragsstaaten:
**AT BE CH DE ES FR GB IT LI NL SE**

(56) Entgegenhaltungen:
**US-A- 3 448 808**
**US-A- 3 463 233**

(73) Patentinhaber: **Brennecke, Hermann, Dipl.-Ing.,
Heidelberger Landstrasse 175,
D-6100 Darmstadt-Eberstadt(DE)**
Patentinhaber: **Liere, Horst Dipl.-Ing., Sandweg 4,
D-6116 Eppertshausen(DE)**

(72) Erfinder: **Brennecke, Hermann, Dipl.-Ing., Heidelberger
Landstrasse 175, D-6100 Darmstadt-Eberstadt(DE)**
Erfinder: **Liere, Horst Dipl.-Ing., Sandweg 4,
D-6116 Eppertshausen(DE)**

(74) Vertreter: **Brommer, Hans Joachim, Dr.-Ing. et al,
Patentanwälte Dipl.-Ing. R. Lemcke Dr.-Ing. H.J.
Brommer Bismarckstrasse 16 Postfach 4026,
D-7500 Karlsruhe 1(DE)**

## Beschreibung

Die Erfindung betrifft ein Löschsystem für Friteusen, insbesondere in Restaurationsbetrieben, wobei oberhalb der Friteuse eine Dunstabzugshaube angeordnet ist, mit der ein Brandüberwachungselement verbunden ist, das im Brandfall die Zufuhr von Löschmittel über ggf. in der Dunstabzugshaube angeordnete Löschdüsen auslöst.

Ein derartiges Löschsystem ist durch die US-A 3 403 233 bekannt.

Friteusen unterliegen aufgrund der hohen Temperaturen des Fritieröls, einer nicht unerheblichen Entzündungsgefahr. Es ist daher in Großküchen seit langem üblich, Friteusen mit einem Löschsystem auszustatten.

Bei den bisher bekannten Löschsystemen besteht das Brandüberwachungselement aus Temperaturfühlern, SchmelzlotElementen oder dergleichen, die in der Dunstabzugshaube eingebaut sind und im Brandfall durch die Temperaturer höhung die Zufuhr von Löschmittel auslösen. Bis sich die Temperaturerhöhung jedoch den Oberwachungselementen mitteilt und bis diese schließlich ansprechen, hat sich der Brand von der Friteuse häufig bereits auf die Dunstabzugshaube ausgebreitet. Daher ist auch bei erfolgreichem Löschvorgang der Brandschaden ziemlich hoch. Eine rasche Wiederinbetriebnahme der Küche ist meist ausgeschlossen.

Zwar sind an sich wesentlich schneller reagierende Brandüberwachungselemente bekannt, nämlich lichtempfindliche Elemente wie Infrarot-Detektoren und dergleichen. Diese Überwachungselemente sind aber für den Küchenbereich zu empfindlich, weil sie zu Fehlauslösungen führen. Wird beispielsweise an den neben der Friteuse befindlichen Herdplatten flambiert, so erkennen die lichtempfindlichen Elemente sofort den Feuerschein und geben die Löschmittelzufuhr frei. Ebenso kann auch das Fotografieren mit Blitzlicht zu Fehlauslösungen führen. Die Verwendung lichtempfindlicher Elemente ist daher für Restaurationsräume ungeeignet und beschränkt sich im wesentlichen auf den Einsatz in industriellen Rohrleitungen oder Reaktoren, in denen feuergefährliche oder explosive Stoffe strömen.

Hiervon ausgehend liegt der vorliegenden Erfindung die Aufgabe zugrunde, das eingangs beschriebene Löschsystem für Friteusen dahingehend zu verbessern, daß es sich einerseits durch höhere Ansprechgenauigkeit, andererseits aber durch hohe Funktionssicherheit, insbesondere die Vermeidung von Fehlauslösungen auszeichnet. Des weiteren soll sich das System so in den Küchenbereich integrieren lassen, daß es bei den üblichen Küchenarbeiten nicht im Weg ist.

Diese Aufgabe wird erfindungsgemäß durch ein Löschsystem gelöst, wie es in den Ansprüchen 1 bzw. 6 gekennzeichnet ist.

Durch diese Maßnahmen sichert man sich einerseits die hohen Ansprech- und Auslösegeschwindigkeiten der lichtempfindlichen Elemente, andererseits wird durch das auf die Öloberfläche gerichtete, längliche Rohr jede Fehlauslösung durch Streulicht verhindert.

Zwar beschränkt dieses Rohr in an sich unerwünschter Weise das Sichtfeld des lichtempfindlichen Elementes auf einem relativ kleinem Fleck, wohingegen man bisher stets angestrebt hat, möglichst den gesamten feuergefährdeten Bereich optisch zu erfassen. Untersuchungen der Anmelder haben aber ergeben, daß es bei der Entzündung des Öls von Friteusen fast schlagartig zu einer flächenhaften Ausbreitung der Flammen über die gesamte Öloberfläche kommt. Dadurch ist die Beschränkung des Überwachungsbereiches auf einen kleinen Ausschnitt der Öloberfläche mit keiner merklichen Verzögerung der Auslösezeit verbunden.

Zur Erhöhung der Betriebssicherheit beträgt die Länge des Rohres ein Vielfaches, insbesondere das 5- bis 100fache seines Innendurchmessers. Man kann auf diese Weise die Fortpflanzung von Streulicht durch aufeinanderfolgende Reflektionen auf ein unkritisches Maß beschränken.

Dem gleichen Ziel dient es, wenn das Rohr eine nicht oder nur schwach reflektierende Innenfläche aufweist, die ggf. durch Beschichtung oder durch Aufrauhen künstlich erzeugt werden kann.

Durch die gegenüber allen bisher bekannten Friteusen-Löschsystemen um Größenordnungen schnellere Ansprechzeit bietet sich die vorteilhafte Möglichkeit, die Löschdüsen nicht mehr wie bisher in die Dunstabzugshaube einzubauen, sondern sie in unmittelbarer Nähe der Friteuse anzuordnen. So können die Löschdüsen unmittelbar am oberen Rand des Ölbehälters montiert werden. Der vom Löschmittel verunreinigte Bereich ist dadurch minimal und die Friteuse braucht lediglich gesäubert und mit neuem Öl gefüllt zu werden und kann dann nach kurzer Zeit wieder in Betrieb genommen werden.

Um ein nochmaliges Entzünden des Öles durch Nachheizung auszuschließen, empfiehlt es sich in Weiterbildung der Erfindung, daß das lichtempfindliche Element gleichzeitig mit der Auslösung der Löschmittelzufuhr auch eine Unterbrechung der Stromzufuhr zur Friteuse, also das Abstellen ihrer Heizung bewirkt.

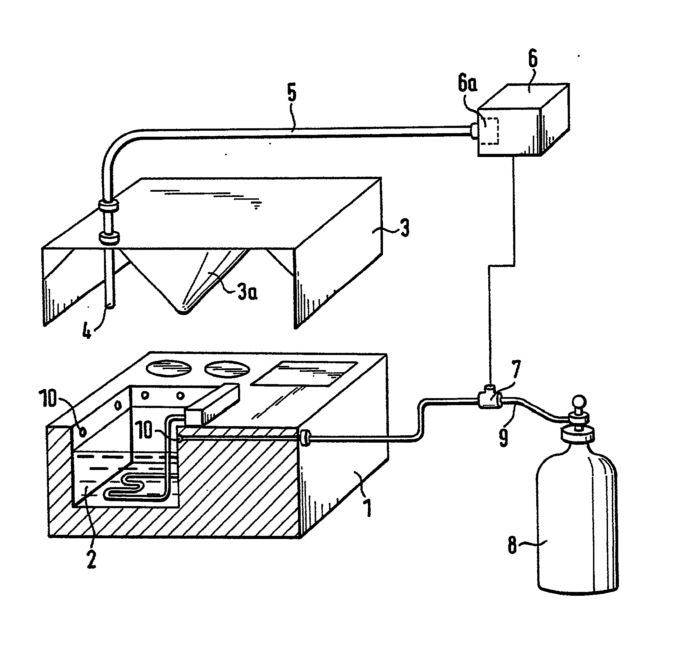

Weitere Merkmale und Vorteile der Erfindung ergeben sich aus der nachfolgenden Beschreibung eines Ausführungsbeispieles anhand der Zeichnung. Sie zeigt ein schematisches Schrägbild einer Friteuse mit darüber angeordneter Dunstabzugshaube mit eingebautem Löschsystem.

In ein Koch- bzw. Bratzentrum 1 ist eine Friteuse 2 eingebaut, die der Übersichtlichkeit halber geschnitten ist. Darüber befindet sich eine Ablufthaube 3, durch deren Filter 3 a hindurch die Luft abgesaugt und über nicht weiter dargestellte Kanäle abgeführt wird.

In der Ablufthaube ist ein längliches Rohr 4 montiert. Es ist mit seinem unteren Ende auf das Ölbad der Friteuse 2 gerichtet. Auf seinem oberen Ende mündet koaxial ein Lichtleiter 5, der andererseits an eine Auswerteeinheit 6 angeschlossen ist. In dieser Auswerteeinheit befindet sich ein lichtempfindliches Element 6 a, auf das der Eingang des Lichtleiters 5 gerichtet ist. Die Ausgangssignale dieses lichtempfindlichen Elementes werden in an sich bekannter Weise verarbeitet, derart, daß bei Flammen-Erkennung schlagartig Löschmittel in den Brandherd gesprüht wird.

Dazu ist die Auswerteeinheit 6 in an sich bekannter Weise an ein Ausströmventil 7 eines Behälters 8 angeschlossen, der mit unter Druck stehendem Löschmittel, beispiels weise Löschschaum gefüllt ist.

Von dem Ventil 7 geht eine Leitung 9 zu verschiedenen Löschdüsen 10. Diese Löschdüsen sind in die Beckenwand der Friteuse 2 eingebaut und fluten somit unmittelbar in den Ölbehälter. Die übrigen Bereiche des Kochzentrums werden dabei nicht in Mitleidenschaft gezogen. Dies ist neben der kurzen Ansprechzeit ein weiterer erheblicher Vorteil der erfindungsgemäßen Löschanlage.

Selbstverständlich liegt es im Rahmen der Erfindung, die Löschdüsen stattdessen an anderer Stelle, etwa in der Dunstabzugshaube 3 anzuordnen und von dort aus die Friteuse 2 zu löschen.

Schließlich kann es zweckmäßig sein, das Rohr 4 zur Anpassung an die unterschiedlichen Bauhöhen der Dunstabzugshauben 3 durch einen verschiebbaren Klemmsitz an der Dunstabzugshaube festzulegen, wobei das Rohr ggf. auch ein Stück nach oben aus der Dunstabzugshaube vorstehen kann. Man kann dadurch eine einheitliche Rohrlänge für alle Bauarten der Dunstabzugshauben verwenden. Der Innendurchmesser des Rohres 4 wird zweckmäßig ähnlich wie der des angeschlossenen Lichtleiters 5 gewählt. Die Länge wird hingegen so groß wie möglich gewählt, um eine absolut zuverlässige Abschirmung gegenüber Streulicht sicherzustellen.

Die Erfindung ist vorstehend unter Verwendung eines Lichtleiters beschrieben worden. Es liegt jedoch auch im Rahmen der Erfindung, auf den Lichtleiter zu verzichten und das lichtempfindliche Element (6a) direkt an das obere Ende des Rohres (4) anzuschließen.

## Patentansprüche

1. Löschsystem für Friteusen, insbesondere in Restaurationsbetrieben, wobei oberhalb der Friteuse (2) eine Dunstabzugshaube (3) angeordnet ist, mit der ein Brandüberwachungselement (6a) verbunden ist, das im Brandfall die Zufuhr von Löschmittel über ggf. in der Dunstabzugshaube (3) angeordnete Löschdüsen (10) auslöst,
dadurch gekennzeichnet,
daß das Brandüberwachungselement (6a) in an sich bekannter Weise ein lichtempfindliches Element, insbesondere ein Infrarot-Detektor (6a) ist und außerhalb der Dunstabzugshaube (3) angeordnet und mit ihr über einen Lichtleiter (5) verbunden ist und daß das dunstabzugsseitige Ende dieses Lichtleiters (5) in ein Rohr (4) mündet, dessen Wandung lichtundurchlässig und dessen Länge ein Vielfaches seines Innendurchmessers ist und daß dieses Rohr (4) von der Dunstabzugshaube (3) ausgehend nach unten auf die Öloberfläche der Friteuse (2) gerichtet ist.

2. Löschsystem nach Anspruch 1, dadurch gekennzeichnet, daß die Länge des Rohres (4) das 5- bis 100-fache seines Innendurchmessers beträgt.

3. Löschsystem nach Anspruch 1 oder 2, dadurch gekennzeichnet, daß das Rohr (4) eine nicht oder schwach reflektierende Innenfläche aufweist.

4. Löschsystem nach einem der vorherigen Ansprüche, dadurch gekennzeichnet, daß die Löschdüsen (10) in die Friteuse (2) eingebaut sind.

5. Löschsystem nach einem der vorherigen Ansprüche, dadurch gekennzeichnet, daß die Auslösung der Löschmittelzufuhr sogleich eine Unterbrechung der Stromzufuhr zur Friteuse (2) bewirkt.

6. Löschsystem nach dem Oberbegriff des Anspruchs 1, dadurch gekennzeichnet, daß das Brandüberwachungselement (6a) in an sich bekannter Weise ein lichtempfindliches Element, insbesondere ein Infrarot-Detektor (6a) ist und außerhalb der Dunstabzugshaube (3) angeordnet ist, daß das dunstabzugsseitige Ende des lichtempfindlichen Elementes (6a) direkt an ein Rohr (4) angeschlossen ist, dessen Wandung lichtdurchlässig und dessen Länge ein Vielfaches seines Innendurchmessers ist und daß dieses Rohr (4) von der Dunstabzugshaube (3) ausgehend nach unten auf die Öloberfläche der Friteuse (2) gerichtet ist.

## Claims

1. Fire extinguisher system for deep fryers, particularly in catering establishments, wherein a steam extraction cooker hood (3) is arranged above the fryer (2) and is connected with a fire monitoring element (6a) which in the event of fire initiates the supply of extinguishant via extinguisher nozzles (10) arranged optionally in the cooker hood (3), characterized in that the fire monitoring element (6a) is a per se known light-sensitive element, in particular an infra-red detector (6a) and is arranged externally of the cooker hood (3) and is connected therewith by way of a light conductor (5); and that the end of this light conductor (5) at the steam extraction side opens into a pipe (4) the wall of which is impermeable to light and the length of which is a multiple of its internal diameter; and that this pipe (4) is directed downwardly from the cooker hood (3) towards the oil surface of the fryer (2).

2. Fire extinguisher system according to claim 1, characterised in that the length of the pipe is 5–100 times greater than its internal diameter.

3. Fire extinguisher system according to claim 1 or 2, characterised in that the pipe (4) has a non-reflecting or weakly reflecting internal surface.

4. Fire extinguisher system according to one of the preceding claims, characterised in that the extinguisher nozzles (10) are built into the fryer (2).

5. Fire extinguisher system according to one of the preceding claims, characterised in that the initiation of the supply of extinguishant simultaneously effects an interruption of the supply of current to the fryer (2).

6. Fire extinguisher system according to the preamble of claim 1, characterised in that the fire monitoring element (6a) is a per se known light-sensitive element, particularly an infra-red detector (6a), and is arranged externally of the cooker hood (3); that the end of the light-sensitive element (6a) at the steam extraction side is connected directly to a pipe (4) the wall of which is opaque and the length of which is a multiple of its internal diameter; and that this pipe (4) is directed downwardly from the cooker hood (3), towards the oil surface of the fryer (2).

## Revendication

1. Système d'extinction d'incendie pour friteuses, en particulier dans des installations de restauration, dans lequel est située au-dessus de la friteuse une hotte d'aspiration (3), à laquelle est relié un élément de surveillance d'incendie (6a), qui déclenche, en cas d'incendie, l'amenée de moyens d'extinction à l'aide d'ajutages d'extinction disposés au-dessus, éventuellement à l'intérieur de la hotte d'aspiration (3), caractérisé en ce que l'élément de surveillance d'incendie (6a) est, d'une manière connue en soi, un élément sensible à la lumière, en particulier un détecteur à infrarouge (6a), et est disposé en dehors de la hotte d'aspiration (3) et relié à celle-ci par un guide de lumière (5) et en ce que l'extrémité de ce guide de lumière (5) située du côté de la hotte débouche dans un tube (4), dont la paroi n'est pas perméable à la lumière et dont la longueur est un multiple de son diamètre intérieur et en ce que ce tube (4) est orienté, en partant de la hotte d'aspiration (3), vers le bas sur la surface d'huile de la friteuse (2).

2. Système d'extinction d'incendie selon la revendication 1, caractérisé en ce que la longueur du tube (4) est égale à cinq à cent fois son diamètre intérieur.

3. Système d'extinction d'incendie selon la revendication 1 ou 2, caractérisé en ce que le tube (4) présente une surface intérieure qui n'est pas réfléchissante ou qui ne l'est que faiblement.

4. Système d'extinction d'incendie selon l'une des revendications précédentes, caractérisé en ce que les ajutages d'extinction (10) sont montés dans la friteuse (2).

5. Système d'extinction selon l'une des revendications précédentes, caractérisé en ce que le déclenchement de l'amenée de moyens d'extinction entraîne simultanément une interruption de l'amenée de courant à la friteuse (2).

6. Système d'extinction selon le préambule de la revendication 1, caractérisé en ce que l'élément de surveillance d'incendie (6a) est, d'une manière connue en soi, un élément sensible à la lumière, en particulier un détecteur à infrarouge (6a) et est disposé en dehors de la hotte d'aspiration (3), en ce que l'extrémité de l'élément (6a) sensible à la lumière située du côté de la hotte d'aspiration, est raccordé directement à un tube (4) dont la paroi n'est pas perméable à la lumière et dont la longueur est un multiple de son diamètre intérieur et en ce que ce tube (4) est orienté, en partant de la hotte d'aspiration (3), vers le bas sur la surface d'huile de la friteuse (2).